# FASCICULE DE BREVET EUROPEEN

(11) **EP 2 657 516 B1**
(45) Date de publication et mention de la délivrance du brevet: **15.07.2015**
(21) Numéro de dépôt: 13161037.0
(22) Date de dépôt: 26.03.2013
(51) Int. Cl.: F03D 7/02

(54) **Aérogénérateur comprenant un ralentisseur électro-magnétique pour ralentir la vitesse de rotations des pales**
Windkraftanlage, die eine elektromagnetische Bremse zur Reduzierung der Drehgeschwindigkeit der Rotorblätter umfasst
Wind turbine including an electromagnetic retarder for slowing the blade rotation speed

(30) Priorité: 30.03.2012 FR 1252962
(43) Date de publication de la demande: 30.10.2013
(73) Titulaire: Eolys Ressources et Energies, 85120 St. Hilaire De Voust (FR)
(72) Inventeur: Bousquet, Jérôme, 85550 La Barre-De-Monts (FR); Dybowski, Lionel, 77220 Presles En Brie (FR)
(74) Mandataire: Vidon Brevets & Stratégie

(56) Documents cités:
- EP-A1- 0 486 765
- EP-A2- 2 341 244
- DE-A1-102006 024 023
- US-A1- 2011 140 425

## Description

### 1. Domaine de l'invention

L'invention concerne la conception et la fabrication d'un aérogénérateur, plus communément appelé éolienne.Plus précisément, l'invention concerne un aérogénérateur comprenant une génératrice couplée à un ralentisseur électromagnétique permettant de ralentir la rotation des pales au delà d'une vitesse de vent déterminé.

### 2. Art antérieur

Une éolienne transforme l'énergie cinétique du vent en énergie électrique. Une éolienne comprend notamment :
- un mât permettant de placer la génératrice à une hauteur suffisante pour permettre son mouvement (ce qui s'avère nécessaire en particulier pour les éoliennes à axe horizontal) et/ou placer le rotor de cette génératrice à une hauteur lui permettant d'être entraîné par un vent plus fort et régulier, par comparaison au vent soufflant au niveau du sol ;
- une génératrice composée d'un rotor et d'un stator : le stator est solidaire de la nacelle et le rotor est entraîné directement par les pâles sous l'action du vent ;
- une nacelle montée au sommet du mât, accueillant la génératrice.

Les éoliennes sont généralement classifiées en fonction de leur capacité de production d'électricité. De nos jours, on trouve des éoliennes de 5 KW à 35 KW destinés aux particuliers et aux petites exploitations, de 36 KW à 1 MW pour les besoins locaux, et d'aéogénérateurs de puissance supérieure à 1 MW participant à la production massive d'électricité à l'échelle d'un pays.

Dans le domaine de l'invention, il est connu que l'efficacité d'une éolienne dépend en grande partie de son emplacement. En effet, la puissance fournie augmente avec la puissance du vent. C'est pourquoi les sites éoliens sont choisis pour la fréquence et la vitesse des vents présents.

Toutefois, les vents ne sont évidemment pas constants ; il est même possible de constater des turbulences qui peuvent être importantes.

Lors du fonctionnement d'une éolienne, on cherche à obtenir une production d'électricité régulière et, par ailleurs, à éviter de faire subir à l'éolienne des contraintes excessives en cas de vent très fort. Ceci implique :
- un arrêt du rotor en cas de vent excessif,
- une régulation de la vitesse du rotor.

Actuellement, différentes solutions existent pour exercer une régulation aérodynamique sur les pâles.

Selon une technique connue, on modifie l'orientation des pâles sur les moyeux pour modifier la prise au vent des pâles et, par conséquent, l'énergie récupérée par l'éolienne. Cette technique nécessite une mécanique complexe et est surtout utilisée pour des éoliennes de forte puissance.

Selon une autre technique connue, on met en oeuvre des volets (autrement désignés par « aérofreins ») montés pivotants sur les pâles, et s'ouvrant automatiquement si la vitesse du vent devient excessive, de façon à ralentir les pâles ou diminuer leur portance en provoquant un décrochage aérodynamique. Cette technique nécessite aussi une mécanique complexe, et génère du bruit.

Selon encore une autre technique, décrite dans la demande FR2962498 déposée par la demanderesse, un système de safran est monté de façon à faire pivoter la nacelle autour d'un axe vertical sur le mât. De cette façon, en cas de vent excessif, la nacelle est tournée de façon à ne plus être dos au vent ce qui diminue la surface efficace et baisse le rendement de l'éolienne jusqu'à éventuellement l'arrêter lorsque l'axe de la nacelle est à 90° de l'axe du vent. De cette manière il est possible de ralentir la vitesse des pales en cas de vent trop violents. Cette technique a un temps de réponse assez long et n'offre pas une bonne régulation lorsque le vent varie très rapidement et en rafale.

Selon encore une autre technique, on met en oeuvre un système de freinage de type frein à disque. Ce type de solution génère de l'usure de plaquettes et induit une maintenance régulière et des coûts d'intervention.

Le document US 2011/140425 publié le 16 juin 2011 décrit l'utilisation d'un frein électromagnétique. Un module de contrôle reçoit d'un capteur 300 la vitesse du rotor du générateur 132 et commande le freinage au niveau du frein 202. Le module prend en compte notamment d'éventuelles oscillations pour moduler le freinage, mais rien n'est prévu pour gérer le fonctionnement en cas de fortes rafales.

Le document EP 2 341 244 publié le 6 Juillet 2011 décrit une éolienne équipé d'un système de freinage, tel qu'un frein électromagnétique, ayant un couple déterminé pour ralentir jusqu'à arrêter le mouvement du rotor. Un capteur mesure la vitesse du rotor et transmet les informations à un module de commande chargé de contrôler le frein. Ce document n'enseigne rien sur la commande à transmettre en cas de fortes rafales.

### 3. Objectifs de l'invention

L'invention a notamment pour objectif de pallier les inconvénients de l'art antérieur.

Plus précisément, l'invention a pour objectif de proposer une éolienne produisant une énergie électrique de façon régulière tout en subissant des rafales de vent de grande amplitude.

### 4. Exposé de l'invention

Ces objectifs, ainsi que d'autres qui apparaîtront par la suite, sont atteints grâce à l'invention qui a pour objet un aérogénérateur comprenant une génératrice couplée à un arbre rapide animé en rotation par le vent agissant sur des pales et apte à générer un courant électrique. Cet aérogénérateur comprend en outre des moyens de mesure de la vitesse de rotation de l'arbre rapide, au moins un ralentisseur électromagnétique apte à réduire la vitesse de l'arbre rapide, et une unité de régulation de la vitesse de rotation de l'arbre rapide. L'unité de régulation reçoit des signaux provenant des moyens de mesure et émet des signaux de commande vers le ralentisseur électromagnétique pour ralentir la rotation d'au moins l'arbre rapide lorsque la vitesse atteint une vitesse déterminée. La valeur de commande appliquée au ralentisseur électromagnétique est proportionnelle à l'écart entre la valeur du vent animant en rotation les pales et une valeur de vent mesurée par un anémomètre.

Ainsi, grâce à l'invention, on obtient un aérogénérateur dont la conception permet d'envisager une production d'électricité optimale, en particulier dans le cas des aérogénérateurs du « petit éolien ».

En effet, la présence d'un ralentisseur électromagnétique permet de limiter la vitesse de l'arbre animant la génératrice et ainsi de générer une production d'électricité optimale. Un aérogénérateur selon l'invention est donc apte à produire de l'électricité sur une plage de vent plus étendue qu'un aérogénérateur de l'art antérieur.

Selon un mode de réalisation, la génératrice dispose d'un moyen de réglage du couple, l'action de ralentissement par le ralentisseur électromagnétique intervient lorsque le couple est maximal. De cette manière, il est possible de faire fonctionner la génératrice sans utiliser le ralentisseur électromagnétique dans une plus large plage de vent. Si le couple est maximal et si la vitesse du vent augmente, alors il est nécessaire d'activer le ralentisseur électromagnétique.

Selon un autre mode de réalisation, les pales sont solidaires d'un arbre lent, et en ce que l' aérogénérateur comporte un élément multiplieur de tour entre l'arbre lent et l'arbre rapide, ledit ralentisseur électromagnétique (10) étant couplé avec l'arbre rapide. De cette manière, le ralentisseur agit directement sur l'arbre sur lequel est monté la génératrice et peut ainsi limiter sa vitesse de rotation.

Selon un autre mode de réalisation, l'unité de régulation est paramétrée pour maintenir la vitesse de rotation de l'arbre rapide constante, au delà d'une certaine vitesse de vent. De cette manière, la production d'électricité est parfaitement régulière et optimale. Selon un autre mode de réalisation, le ralentisseur électromagnétique est placé derrière la génératrice par rapport à la direction du vent. De cette manière, la propagation de la chaleur dégagée par le ralentisseur électromagnétique vers le reste des éléments de l'aérogénérateur et notamment la génératrice, est limitée.

Selon un autre mode de réalisation, l'aérogénérateur comporte une coque entourant au moins ledit ralentisseur électromagnétique, la section de la coque est plus importante à l'avant qu'à l'arrière de façon à créer un bord de fuite à l'arrière pour générer une dépression en au moins un endroit déterminé, au moins une ouïe de sortie d'air étant disposée à cet endroit déterminé. De cette manière, le refroidissement du ralentisseur est mieux assuré. Selon un autre mode de réalisation, le ralentisseur électromagnétique est couplé avec l'arbre rapide (7) par un élément élastique et non conducteur de chaleur. De cette manière, la propagation de la chaleur dégagée par le ralentisseur vers le reste des éléments de l'aérogénérateur et notamment la génératrice, est plus limitée.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est une vue d'ensemble d'une éolienne selon l'invention ;
- la figure 2 montre une coupe longitudinale de la nacelle et de la génératrice selon un exemple de réalisation de l'invention ;
- la figure 3 est une illustration schématique du principe de régulation selon un exemple de réalisation de l'invention ;
- la figure 4 présente des chronogrammes illustrant le principe du fonctionnement d'un aérogénérateur selon l'invention.

### 6. Description d'un mode de réalisation de l'invention

### 6.1 Principe général

La présente invention consiste en une éolienne dans laquelle le mouvement rotatif des pales est transmis à un arbre solidaire d'une génératrice et d'un arbre solidaire d'un ralentisseur électromagnétique. Le ralentisseur électromagnétique est commandé électriquement pour freiner la rotation des pales en agissant sur un arbre lorsque la vitesse de rotation des pales atteint un seuil déterminé.

Ainsi, il est possible de calibrer les installations en fonction de la puissance maximale que délivre l'éolienne et qui constitue sa puissance nominale. Par exemple, la puissance maximale que peut produire une éolienne définit la section des câbles transmettant cette énergie et l'ampérage des disjoncteurs. Une telle calibration permet d'optimiser les coûts d'installation.

### 6.2 Description d'un mode de réalisation

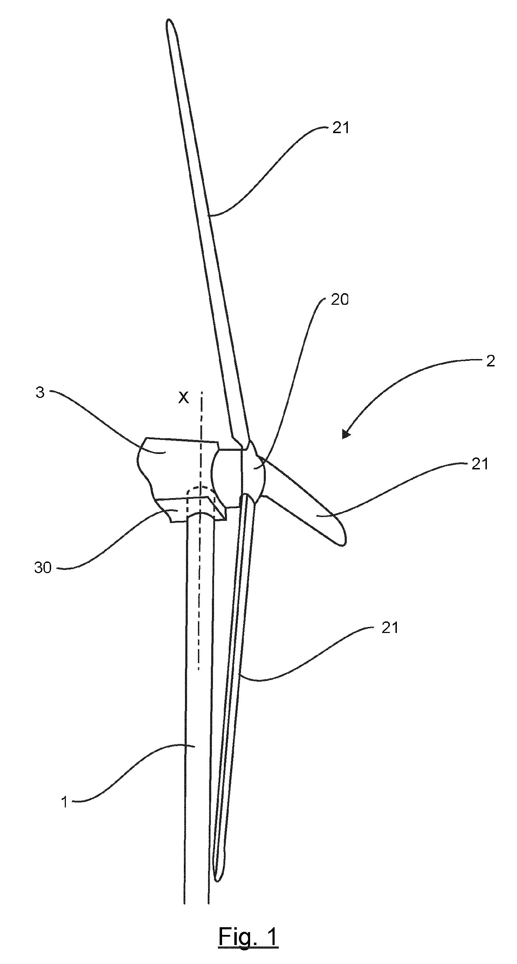

En référence à la figure 1, une éolienne selon l'invention comprend :
- un mât 1 ;
- une génératrice 2, porté par le mât 1, cette génératrice ayant un axe de rotation 22 horizontal est éventuellement capable de pivoter autour d'un axe vertical X à l'aide de moyens d'entraînement motorisés 30;
- au moins une pale 21 se déplaçant sous la force de vent ;
- une nacelle 3, recevant la génératrice 2.

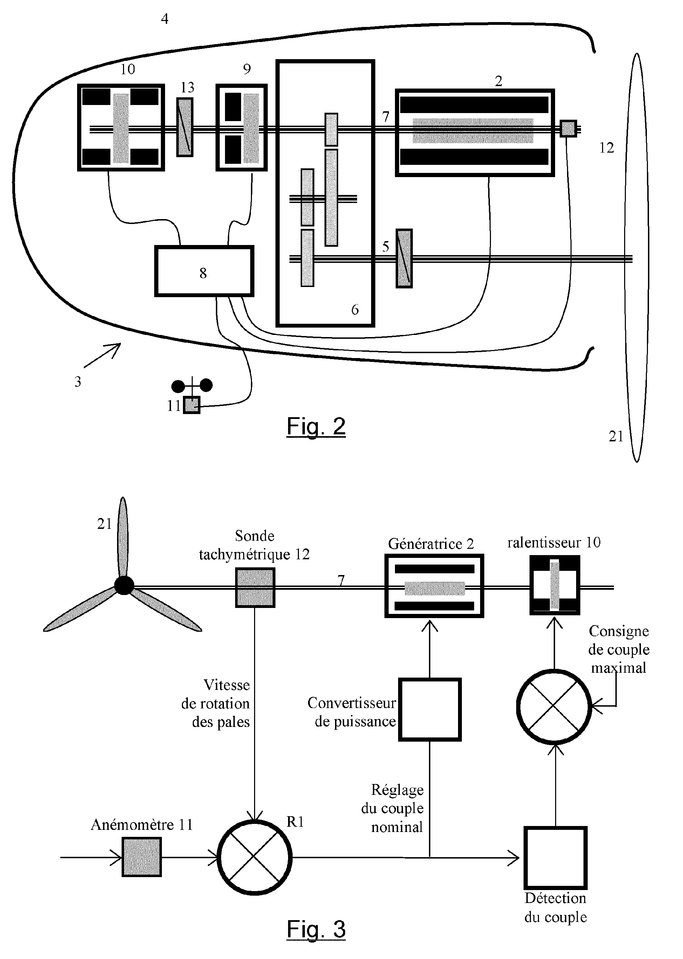

La figure 2 montre une coupe longitudinale de la nacelle et de la génératrice.

La nacelle 3 comprend une coque 4 constituant un habitacle contenant les différents équipements dont :
- un axe lent 5 solidaire des pales qui transmet le mouvement de rotation des pales à un bloc multiplicateur 6,
- un bloc multiplicateur 6 qui reçoit l'arbre lent 5 et à l'aide d'un système d'engrenage transmet en la multipliant sa vitesse de rotation à un arbre rapide 7,
- une unité centrale 8 recevant des informations de capteurs et envoyant des commandes aux différentes unités. L'unité centrale est connecté à une mémoire contenant un programme exécutable de régulation de vitesse des pales,
- une génératrice 2 chargée de produire du courant électrique à partir du mouvement transmis par l'arbre rapide 7. La génératrice est pilotée en couple et en vitesse par une commande vectorielle de flux,
- un frein de parking 9 chargé de bloquer la rotation de l'arbre rapide 7, en cas de maintenance sur la nacelle par exemple,
- un ralentisseur électromagnétique 10 conçu pour offrir une résistance mécanique variable à la rotation de l'arbre rapide 7,
- un anémomètre 11 disposé sur le mat 1 suffisamment en dessous de la nacelle pour ne pas être perturbé par le flux d'air traversant les pales,
- une sonde tachymétrique mesurant la vitesse de rotation de la génératrice 2 placée sur ou à proximité immédiate de l'arbre rapide 7.

Après avoir détaillé les différents équipements, nous allons maintenant détailler comment ceux-ci coopèrent.

La puissance maximale pour une éolienne de 35 KW par exemple, est obtenue à l'aide d'un vent de 12 mètres par seconde, ce qui fait tourner l'arbre rapide à 2400 tours/mn par exemple. Au delà de cette vitesse, il est nécessaire d'exercer un freinage sur au moins un arbre de l'éolienne pour ne pas dépasser la puissance nominale que peut fournir la génératrice 2.

La figure 3 est une illustration schématique du principe de régulation selon un exemple de réalisation de l'invention. L'unité centrale 8 et son programme de régulation analysent les signaux provenant de l'anémomètre 11 et de la sonde tachymétrique 12. Ces signaux informent l'unité centrale de la vitesse de rotation instantanée des pales et de la vitesse instantanée du vent. La vitesse de l'arbre rapide peut aussi être évaluée par la puissance fournie par la génératrice à couple constant. Cette variante est moins coûteuse mais moins précise que l'utilisation d'une sonde tachymétrique. Connaissant le rapport de multiplication entre l'arbre lent 5 et l'arbre rapide 7, connaissant la vitesse de l'un des arbres, il est facile de déterminer la vitesse de l'autre. Dans le contexte de la présente invention, la puissance maximale de la génératrice est atteinte pour une vitesse de rotation Vmax qui dépend du couple de la génératrice donné. Typiquement, pour le modèle testé et pour un couple nul, la vitesse Vmax est égale à 75 tours/min sur l'arbre lent. Si la vitesse du vent augmente (détectée par l'anémomètre ou par la mesure instantanée de puissance fournie par la génératrice), il est nécessaire d'augmenter le couple de la génératrice et ainsi de dégrader le rendement de la génératrice. En modifiant la consigne de couple, on peut ainsi abaisser la consigne de vitesse. Si la vitesse de vent continue à augmenter, il devient alors nécessaire d'utiliser un équipement permettant d'absorber le surplus de puissance fournie par les pales.

Selon un exemple simple de réalisation de la présente invention, l'éolienne est équipée d'un ralentisseur électromagnétique 2 commandé de façon proportionnelle par l'unité centrale 8. L'unité de régulation 8 analyse la vitesse de rotation de l'arbre rapide (soit en mesurant la puissance fournie par la génératrice compte tenu de son couple soit à l'aide de la sonde tachymétrique 12 placé sur l'arbre rapide) et émet des signaux de commande proportionnel vers le ralentisseur électromagnétique 2 pour offrir ainsi une résistance à la rotation de l'arbre rapide et finalement ralentir sa rotation lorsque la vitesse atteint une vitesse déterminée. Selon un exemple de réalisation, le ralentisseur électromagnétique 2 est par exemple commandé par une tension variant entre 0 et 192 volts continue. Pour une commande de 0 volts le ralentisseur n'a aucun effet. De préférence, le ralentisseur électromagnétique est de type « courant de Foucault ». Tout modèle de ralentisseur électromagnétique commandé par une grandeur électrique convient dans le contexte de la présente invention.

On peut ainsi définir trois modes de fonctionnement en fonction de la force du vent. Dans une première plage de vitesse de vent, le fonctionnement est optimal : le ralentisseur n'offre pas de résistance (commande à 0 volts) et le couple de la génératrice est minimum. Dans une seconde plage de vitesse de vent, le fonctionnement est un peu dégradé car le vent dépasse le nominal : le ralentisseur n'offre toujours pas de résistance et le couple de la génératrice augmente jusqu'à une valeur maximale. Dans une troisième plage de vitesse de vent, le fonctionnement est d'avantage dégradé : le ralentisseur offre de la résistance (commande supérieure à 0 volt) et le couple de la génératrice est maximum. Au delà d'une certaine vitesse de vent qui dépasse les capacités de l'éolienne et qui peut l'endommager, l'éolienne est stoppée en plaçant l'axe des pales perpendiculairement à la direction du vent et le frein de parking 9 est activé.

La consigne de couple varie par exemple de 0 % à 200 % du couple nominal de la génératrice. De 0 à 100 % l'énergie est transmise à la génératrice, et au delà de 100%, le ralentisseur électromagnétique est mis en route. Par exemple, soit un multiplicateur 6 ayant un rendement de 95 % et une génératrice ayant un rendement de 97,5 %, supposons que les pales captent une puissance de 70 KW introduite par les pales. La puissance transmise par le multiplicateur 6 est de 66,2 KW et la puissance maximale que peut absorber la génératrice est de 35,6 KW, il est donc nécessaire de dissiper une puissance de 30 KW.

Selon un mode particulier de réalisation, le programme de régulation comporte un module R1 qui émet un signal de commande en fonction de la vitesse du vent, mais aussi de la vitesse des pales de façon à réaliser une boucle de régulation. La régulation de vitesse permet de réguler la puissance en jouant sur les paramètres de consigne de vitesse, consigne de couple et valeur de commande du ralentisseur électromagnétique 10. La régulation est par exemple de type PID. Un étage de conversion de puissance prend ce signal de commande et le convertit en signal de puissance pour l'envoyer à la génératrice 2. En fonction de la mesure de vitesse de rotation des pales et de la vitesse du vent, le module R1 commande le couple de la génératrice 2. Dès que le vent atteint une certaine vitesse permettant de récupérer de l'énergie, le module R1 augmente la consigne de couple en maintenant une consigne de vitesse nulle, de cette façon, l'énergie réactive émise par la génératrice est ainsi récupérée. La charge de la génératrice est optimisée en fonction du couple d'entrée introduit.

Le signal de commande est également transmis à un détecteur de couple qui transmet la valeur à un comparateur qui la compare au couple maximal de la génératrice, ce couple correspondant à une puissance maximale, 35 KW par exemple. Lorsque le détecteur de seuil détecte que le seuil est atteint, alors il transmet un signal de commande au ralentisseur électromagnétique 10.

Selon un mode particulier de réalisation, le comparateur détermine l'écart entre la valeur de commande du couple transmis à la génératrice et la valeur du couple maximal et calcule une valeur de commande du ralentisseur proportionnel à cet écart. De cette façon, l'action du ralentisseur électromagnétique est ajustée et la vitesse de l'arbre animant la génératrice est finement régulée.

Dans l'exemple de réalisation décrit précédemment, la grandeur prise en compte pour déclencher le ralentisseur est le couple, mais une variante consiste à utiliser la mesure de vitesse, ou de puissance.

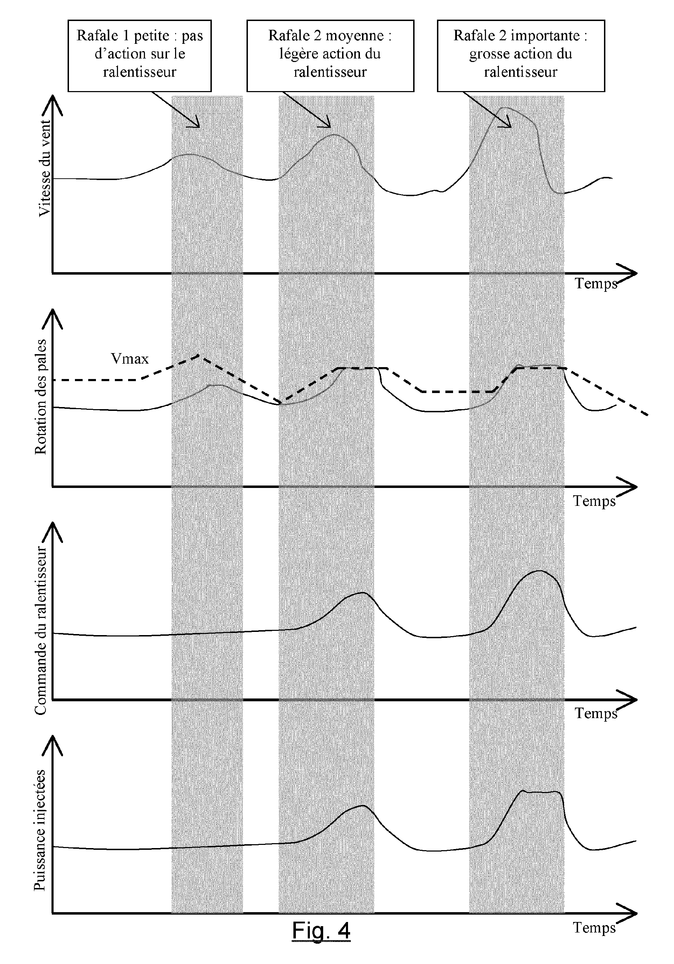

La figure 4 présente des chronogrammes illustrant le principe du fonctionnement d'un aérogénérateur selon l'invention.

L'éolienne reçoit une première rafale 1 qui est de petite amplitude. Le programme de régulation détecte que la consigne de couple est inférieure à la valeur maximale du couple de la génératrice. Le programme de régulation ne transmet pas de commande au ralentisseur. Au cours d'une seconde rafale plus importante, le programme de régulation détecte que la consigne de couple est légèrement supérieure à la valeur maximale du couple de la génératrice. Le programme de régulation calcule alors une valeur de commande du ralentisseur qui est proportionnelle à l'écart entre la valeur de couple déterminée par le module R1 et la valeur de couple maximal. On voit sur la figure 4 que la rotation des pales ne dépasse pas une vitesse maximale.

Au cours d'une troisième rafale, le programme de régulation détecte à l'aide de l'anémomètre 11 une augmentation très importante de la vitesse du vent. Le programme de régulation va alors anticiper la brusque augmentation de la vitesse de rotation des pales en abaissant le seuil de déclenchement de l'action du ralentisseur de façon qu'il agisse plus tôt que pour la seconde rafale. L'anticipation de brusques rafales de vent n'est possible qu'en disposant d'un anémomètre rapide à très faible inertie, et en tout état de cause ayant une réponse plus rapide que celles des pales. Le programme de régulation calcule alors une valeur de commande du ralentisseur qui est proportionnelle à l'écart entre la valeur de couple déterminée par le module R1 et une valeur de seuil inférieure au couple maximal. Cette anticipation permet, comme on le voit sur la figure 4 que la rotation des pales ne dépasse pas la vitesse maximale Vmax.

De préférence, le programme de régulation est paramétré pour maintenir la vitesse de rotation de l'arbre rapide constante, au delà d'une certaine vitesse de vent. Selon un exemple non limitatif, l'expérimentation montre que pour un vent de 12 mètres par seconde et une éolienne de 35 KW, la vitesse de rotation des pales générant une puissance nominale avec un couple minimum est de 75 tours par minute.

L'utilisation d'un ralentisseur électromagnétique dégage une chaleur importante. Dans le modèle utilisé pour expérimentation, la température du ralentisseur se stabilise autour de 450 °C, mais peut monter jusqu'à 600 °C. Pour éviter que la chaleur du ralentisseur se communique au bloc multiplieur 6, un accouplement 13 non conducteur thermiquement est placé entre ces deux éléments, comme le monter la figure 3. Typiquement, cet accouplement est constitué d'un anneau en Polyetherethercetone (PEEK). Ce matériau possède des propriétés élastiques qui permettent d'amortir les a-coups. D'autres matériaux ayant des caractéristiques similaires peuvent convenir pour réaliser l'élément d'accouplement.

Le refroidissement du ralentisseur électromagnétique est également assuré par des ouïes d'aération qui permettent de faire entrer de l'air extérieur. L'utilisation du ralentisseur intervient par grand vent ce qui facilite le mouvement d'air. Pour assurer un refroidissement interne, le rotor du ralentisseur dispose d'ailettes générant un flux d'air à l'intérieur du ralentisseur. Le ralentisseur électromagnétique est placé dans la nacelle à l'extrémité opposée aux pales, de façon que le flux d'air chaud soit propulsé à l'arrière de l'éolienne et ne chauffe pas les autres éléments placés à l'avant. Au moins une ouïe d'entrée est placée à l'avant de la coque en partie inférieure et au moins une ouïe de sortie est placée à l'arrière de la nacelle à proximité du ralentisseur. La section de la coque de la nacelle est plus importante à l'avant qu'à l'arrière de façon à créer un bord de fuite à l'arrière créant une dépression vers l'arrière de la nacelle, facilitant ainsi la sortie du flux d'air au niveau de l'ouïe de sortie. D'autres moyens sont également possibles pour extraire la chaleur du ralentisseur et la propager à l'extérieur, comme par exemple des ailes métalliques couplées au ralentisseur et sortant à l'extérieure de la coque. Pour des éoliennes de fortes puissances nécessitant un ralentisseur électromagnétique susceptible de dégager des chaleurs très importantes, il est possible d'installer un groupe frigorifique.

L'invention n'est pas limitée aux modes de réalisation qui viennent d'être décrits. En particulier, l'invention peut être mise en oeuvre par tout éolienne avec un axe horizontal ou avec un axe vertical, comme celles placées en haut d'immeuble.

## Revendications

1. Aérogénérateur comprenant :
- une génératrice (2) couplée à un arbre rapide (7) animé en rotation par le vent agissant sur des pales (21) et apte à générer un courant électrique,
- des moyens de mesure (12) de la vitesse de rotation de l'arbre rapide (7) ;
- au moins un ralentisseur électromagnétique (10) apte à réduire la vitesse de l'arbre rapide (7) ;
- une unité de régulation (8) de la vitesse de rotation de l'arbre rapide (7) recevant des signaux provenant des moyens de mesure (12) et émettant des signaux de commande vers le ralentisseur électromagnétique (10) pour ralentir la rotation d'au moins l'arbre rapide lorsque la vitesse atteint une vitesse déterminée
**caractérisé en ce que** la valeur de commande appliquée au ralentisseur électromagnétique (10) est proportionnelle à l'écart entre la valeur de la vitesse du vent correspondant à la vitesse de rotation de l'arbre rapide actuellement mesurée et une valeur de la vitesse du vent mesurée par un anémomètre (11) à l'extérieur de l' aérogénérateur.

2. Aérogénérateur selon la revendication 1, **caractérisé en ce que** ladite génératrice (2) dispose d'un moyen de réglage du couple, l'action de ralentissement par le ralentisseur électromagnétique (10) intervient lorsque le couple est maximal.

3. Aérogénérateur selon l'une quelconque des revendications précédentes, **caractérisé en ce que** les pales (21) sont solidaires d'un arbre lent, et **en ce que** l'aérogénérateur comporte un élément multiplieur (6) des tours entre l'arbre lent (5) et l'arbre rapide (7), ledit ralentisseur électromagnétique (10) étant couplé avec l'arbre rapide.

4. Aérogénérateur selon l'une quelconque des revendications précédentes, **caractérisé en ce que** l'unité de régulation (8) est paramétrée pour maintenir la vitesse de rotation de l'arbre rapide (7) constante, au delà d'une certaine vitesse de vent.

5. Aérogénérateur selon l'une quelconque des revendications précédentes, **caractérisé en ce que** le ralentisseur électromagnétique (10) est placé derrière la génératrice (2) par rapport à la direction du vent.

6. Aérogénérateur selon l'une quelconque des revendications précédentes, **caractérisé en ce qu'il** comporte une coque (4) entourant au moins ledit ralentisseur électromagnétique (10), la section de la coque étant plus importante à l'avant qu'à l'arrière de façon à créer un bord de fuite à l'arrière pour générer une dépression en au moins un endroit déterminé, au moins une ouïe de sortie d'air étant disposée à cet endroit déterminé.

7. Aérogénérateur selon l'une quelconque des revendications précédentes, **caractérisé en ce que** ledit ralentisseur électromagnétique (10) est couplé avec l'arbre rapide (7) par un élément élastique et non conducteur de chaleur.

## Patentansprüche

1. Windkraftanlage umfassend:
• einen Generator (2), der an eine schnelle Welle (7) gekoppelt ist, die durch den Wind, der auf Rotorblätter (21) einwirkt, in Drehbewegung versetzt wird und geeignet ist, einen elektrischen Strom zu erzeugen;
• Mittel (12) zum Messen der Drehgeschwindigkeit der schnellen Welle (7);
• mindestens eine elektromagnetische Bremse (10), die geeignet ist, die Geschwindigkeit der schnellen Welle (7) zu reduzieren;
• eine Einheit (8) zum Regeln der Drehgeschwindigkeit der schnellen Welle (7), die Signale von den Mitteln (12) zum Messen erhält und Steuersignale an die elektromagnetische Bremse (10) überträgt, um die Rotation mindestens einer schnellen Welle zu reduzieren, wenn die Geschwindigkeit eine vorherbestimmte Geschwindigkeit erreicht,
**dadurch gekennzeichnet, dass** der Wert des Steuersignals für die elektromagnetische Bremse (10) proportional zum Abstand zwischen dem Wert der Windgeschwindigkeit, die der momentan gemessenen Drehgeschwindigkeit der schnellen Welle entspricht und einem Wert der Windgeschwindigkeit ist, der mittels eines Anemometers (11) außerhalb der Windkraftanlage gemessen wird, ist.

2. Windkraftanlage gemäß Anspruch 1, **dadurch gekennzeichnet, dass** der Generator (2) über ein Mittel zum Regeln des Drehmomentes verfügt, wobei der Bremsvorgang durch die elektromagnetische Bremse (10) erfolgt, wenn das Drehmoment seinen maximalen Wert erreicht.

3. Windkraftanlage gemäß einem der vorhergehenden Ansprüche, **dadurch gekennzeichnet, dass** die Rotorblätter (21) mit einer langsamen Welle verbunden sind und dass die Windkraftanlage ein Vervielfachungselement (6) der Drehzahlen zwischen der langsamen Welle (5) und der schnellen Welle (7) aufweist, wobei die elektromagnetische Bremse (10) an die schnelle Welle gekoppelt ist.

4. Windkraftanlage gemäß einem der vorhergehenden Ansprüche, **dadurch gekennzeichnet, dass** die Einheit (8) zum Regeln so parametriert ist, dass sie die Drehgeschwindigkeit der schnellen Welle (7) bei Überschreiten einer bestimmten Windgeschwindigkeit konstant hält.

5. Windkraftanlage gemäß einem der vorhergehenden Ansprüche, **dadurch gekennzeichnet, dass** die elektromagnetische Bremse (10) in Bezug auf die Windrichtung hinter dem Generator (2) angeordnet ist.

6. Windkraftanlage gemäß einem der vorhergehenden Ansprüche, **dadurch gekennzeichnet, dass** sie eine Schale (4) umfasst, die mindestens die elektromagnetische Bremse (10) umgibt, wobei der Querschnitt der Schale im vorderen Bereich größer ist als im hinteren Bereich, so dass hinten eine aerodynamische Kante ausgebildet wird, um an mindestens einer bestimmten Stelle einen Unterdruck zu erzeugen, wobei mindestens eine Luftausgangsöffnung an dieser bestimmten Stelle angeordnet ist.

7. Windkraftanlage gemäß einem der vorhergehenden Ansprüche, **dadurch gekennzeichnet, dass** die elektromagnetische Bremse (10) mittels eines elastischen, nicht wärmeleitenden Elementes an die schnelle Welle (7) gekoppelt ist.

## Claims

1. Wind turbine comprising:
- a generator (2) coupled to a rapid shaft (7) which is rotated by the wind acting on blades (21), and able to generate an electric current;
- means (12) for measurement of the speed of rotation of the rapid shaft (7);
- at least one electro-magnetic brake (10) which can reduce the speed of the rapid shaft (7);
- a unit (8) for regulation of the speed of rotation of the rapid shaft (7) which receives signals obtained from the means (12) for measurement, and emits control signals to the electro-magnetic brake (10) in order to slow down the rotation of at least the rapid shaft when the speed reaches a specific speed,
**characterised in that** the control value which is applied to the electro-magnetic brake (10) is proportional to the difference between the value of the wind speed corresponding to the speed of rotation currently measured of the rapid shaft, and a value of the wind speed measured by an anemometer (11) outside the wind turbine.

2. Wind turbine according to claim 1, **characterised in that** the said generator (2) has a means for regulation of the torque, the action of slowing down by the electro-magnetic brake (10) takes place when the torque is maximum.

3. Wind turbine according to either of the preceding claims, **characterised in that** that blades (21) are integral with a slow shaft, and **in that** the wind turbine comprises an element (6) for multiplication of the revolutions between the slow shaft (5) and the rapid shaft (7), the said electro-magnetic brake (10) being coupled to the rapid shaft.

4. Wind turbine according to any one of the preceding claims, **characterised in that** the regulation unit (8) is parameterised to keep the speed of rotation of the rapid shaft (7) constant, beyond a certain wind speed.

5. Wind turbine according to any one of the preceding claims, **characterised in that** the electro-magnetic brake (10) is placed behind the generator (2), relative to the direction of the wind.

6. Wind turbine according to any one of the preceding claims, **characterised in that** it comprises a shell (4) which surrounds at least the said electro-magnetic brake (10), the cross-section of the shell being larger at the front than at the rear, such as to create a trailing edge at the rear in order to generate low pressure in at least one specific location, with at least one air output outlet being arranged in this specific location.

7. Wind turbine according to any one of the preceding claims, **characterised in that** the said electro-magnetic brake (10) is coupled to the rapid shaft (7) by means of an elastic element which does not conduct heat.
